(19) Europäisches Patentamt
European Patent Office
Office européen des brevets

(11) Publication number: 0 054 086
A1

(12) # EUROPEAN PATENT APPLICATION

(21) Application number: 80304422.1

(22) Date of filing: 08.12.80

(51) Int. Cl.³: H 01 M 10/08

(43) Date of publication of application:
23.06.82 Bulletin 82/25

(84) Designated Contracting States:
CH DE FR GB IT LI NL SE

(71) Applicant: Hradcovsky, Rudolf Joseph
27 West Beech Street
Long Beach New York 11561(US)

(71) Applicant: Kozak, Otto Robert
27 West Beech Street
Long Beach New York 11561(US)

(72) Inventor: Hradcovsky, Rudolf Joseph
27 West Beech Street
Long Beach New York 11561(US)

(72) Inventor: Kozak, Otto Robert
27 West Beech Street
Long Beach New York 11561(US)

(74) Representative: Warden, John C. et al,
R.G.C. Jenkins & Co. Chancery House 53/64 Chancery
Lane
London WC2A 1QU(GB)

(54) **Lead-acid cell.**

(57) A lead-acid storage cell having a lead negative electrode, a lead dioxide positive electrode and a sulfuric acid electrolyte having an organic catalyst dissolved therein which prevents dissolution of the electrodes into lead sulfate. In the course of discharge, the lead dioxide is reduced to lead oxide and the lead is oxidised.

EP 0 054 086 A1

Croydon Printing Company Ltd.

# LEAD-ACID CELL

This invention relates generally to lead-acid storage cells (and batteries comprising a plurality of such cells), and more particularly to an electrolyte for such cells which significantly improves the operating characteristics thereof.

Battery cells are referred to as "primary" cells when they generate electrical current directly at the expense of chemical energy and can be renewed only by the replacement of the used-up materials. In a storage or "secondary" cell, the chemical changes which occur in furnishing current can be reversed by forcing current through the cell in the proper direction. In the charging process, chemicals which were used up in the ordinary running of the cell are manufactured anew. The most widely used secondary cell is the lead-acid cell; for its low cost, reliability and favourable performance characteristics render it acceptable for many different applications.

The lead-acid storage battery is manufactured in various sizes, ranging in capacity from less than one ampere-hour to several thousand ampere-hours. The most popular storage battery is the lead-acid automotive battery which is used for automobile

starting, ignition and lighting, this battery having a moderate capacity, and a high-rate and low temperature performance.

In a lead-acid cell, use is made of a highly-reactive sponge lead for the negative electrode or cathode and lead dioxide as the active positive or anode electrode, a sulfuric acid solution serving as the electrolyte. As the cell discharges, the active material of both electrodes are converted into lead sulfate. Taking part in this reaction is the sulfuric acid electrolyte which, as the cell discharges, produces water. In the recharging process, the reverse action takes place. By measuring the specific gravity of the electrolyte, one can determine the state of charge, for the specific gravity decreases on discharge and increases on charge.

The discharge and charge reactions of the lead-acid cell are defined by the following expression:

$$Pb + Pb\ O_2 + 2H_2SO_4 \rightleftarrows 2\ Pb\ SO_4 + H_2O$$

in which the arrow to the right indicates the discharge reaction and that to the left the charge reaction. At the end of the charge, electrolysis of water also occurs, generating hydrogen at the cathode and oxygen at the anode.

The overall lead cathode reaction is given by the expression:

$$Pb + SO_4^{=} \longrightarrow Pb\ SO_4 + 2e^-$$

The overall anode reaction is given by the expression:

$$Pb\ O_2 + 4H^+ + SO_4^{=} \longrightarrow Pb\ SO_4 + 2H_2O - 2e^-$$

A pasted-plate design is commonly used in the construction of a lead-acid cell. The active material for each electrode is prepared as a paste by mixing divided lead oxides and suitable expander materials with sulfuric acid. The paste is spread onto a lead-alloy grid which affords the structure to hold the active materials as well as the necessary electrical conductivity. The resultant plates are then soldered to connecting straps to create negative and positive groups which are interleaved. To complete the assembly, separators are placed between the electrodes, the assembly then being housed within a container that is designed to include a sediment space under the assembly to collect any active material that is dislodged therefrom, as well as headroom above the assembly to hold excess electrolyte.

Conventional lead-acid battery cells for automotive applications employ antimonial-lead grids to impart adequate strength to the thin grid structure and to facilitate casting. In recently-developed versions of such cells, use is made of calcium-lead grids which are more resistant to corrosion and self-discharge. For applications other than automobiles, the lead-acid

cells are generally similar in design but differ in their lead-alloy composition, plate thickness, separators and containers in order to optimise the performance characteristics for the particular application.

Among the limitations of a lead-acid storage cell are its poor low-temperature characteristics and its loss of capacity on standing. It is well known that a lead-acid cell permitted to remain in a discharged state for more than six months will become "sulfated" and thereby difficult to discharge. Moreover, because of the relatively large amount of sulfuric acid included in conventional storage cells, in the event of an accident resulting in spillage, this acid may become hazardous.

In view of the foregoing, the main object of this invention is to provide a lead-acid storage cell whose electrolyte is such that sulfation does not occur, the cell operating electrochemically on the principle of reduction-oxidation.

More particularly, it is an object of this invention to provide a lead-acid storage cell of a given capacity which uses far less sulfuric acid than conventional cells and is therefore less hazardous than such cells, the acid having an organic catalyst dissolved therein whereby the lead dioxide electrode of the cell is reduced electrolytically in the course of discharge.

Also an object of the invention is to provide a lead-acid storage cell having good low-temperature characteristics and capable of remaining in the discharged state for a prolonged period without significantly impairing its ability to be recharged.

In accordance with the invention there is provided a lead-acid storage cell comprising a lead negative electrode, a lead dioxide positive electrode, and an electrolyte constituted by a sulfuric acid solution characterised in that the electrolyte has a catalyst dissolved therein formed by an organic substance which prevents sulfation of the electrodes and results, during the discharge of the cell, in reduction of the positive electrode and oxidation of the negative electrode.

In general terms in a lead-acid storage battery in accordance with the invention, the organic catalyst prevents dissolution of the electrodes into lead sulfate so that in the course of discharge the lead dioxide electrode is reduced to lead oxide and the lead electrode is oxidised to produce lead oxide. The electrodes retain the same composition in the discharged state and regain their original composition on recharge. In a preferred embodiment of the cell, glass wool separators are provided between the electrodes which are saturated with the electrolyte.

Inas much as a lead-acid storage cell in accordance with the invention behaves electrochemically in a manner comparable to a nickel-cadmium cell, we shall first consider the behaviour of nickel-cadmium cells.

The active materials in a charged nickel-cadmium cell are trivalent nickel oxide for the positive electrode and cadmium for the negative electrode. The alkaline electrolyte is a solution of potassium hydroxide. A simplified statement of the cell reaction is as follows:

$$Cd + 2Ni\ OOH + 2H_2O \rightleftharpoons Cd\ (OH)_2 + 2\ Ni\ (OH)_2$$

Thus during discharge, the nickel oxide is reduced to the divalent state while the cadmium is oxidised, this electrochemical process being reversed in charging.

Unlike a lead-acid cell, the performance of a nickel-cadmium cell is good at low-temperatures and the cell can be stored in either the charged or discharged condition without damage. Also, reasonable overcharging of a nickel-cadmium cell has no detrimental effect thereon. However, a nickel cadmium cell has a nominal voltage of only 1.2 volts as compared to the 2 volts of a lead-acid cell. Also its internal resistance is much higher than that of a lead-acid cell.

Because of its very low internal resistance, much more current can be drawn from a lead-acid cell

than from a nickel-cadmium cell, a factor which as a practical matter rules out the use of nickel-cadmium cells as storage cells for automotive applications which require a heavy starting current.

A lead-acid storage battery cell in accordance with the invention makes used of a sponge-lead for the negative and lead dioxide for the positive electrode, the same as in conventional cells. However, the sulfuric acid electrolyte has dissolved therein an organic catalyst which prevents dissolution of the electrodes in the sulfuric acid into lead sulfate and functions to bring about a reduction-oxidation electrochemical action comparable to that occurring in an alkaline cell.

Thus in the course of discharge, the lead dioxide positive is reduced to lead oxide while the lead negative is oxidised to form lead oxide. In recharging, the process is reversed. No lead sulfate is produced in a lead-acid cell in accordance with the invention, for only water takes part in the electrochemical process while the acid functions to render the electrolyte conductive.

The following are examples of electrolytes suitable for use in lead-acid storage cells in accordance with the invention.

Example I

In 100 $cm^3$ of $H_2SO$, 80% concentration, the following ingredients are added:

(a) 15 grams of nitrocellulose (approximately $C_6 H_7 O_2 (ONO_2)_3$ ) and

(b) 2.5 grams of synthetic or natural camphor ($C_{10} H_{16} O$).

After these ingredients are dissolved in the $H_2SO_4$, the acid is diluted to the required specific gravity (15 - 30 Be).

Example II

In 100 $cm^3$ of $H_2SO_4$, 80% concentration, the following ingredient is added:

20 grams of "Celluloid". This trademark refers to a plastic consisting essentially of a solid solution of cellulose nitrate and camphor or other plasticiser.

After the Celluloid is dissolved, the $H_2SO_4$ is diluted to the required specific gravity.

Modifications:

With respect to Example I, in which the ingredients added to the sulfuric acid are (a) nitrocellulose and (b) camphor, a first modification is to use 20 grams of (a) and 5 grams of (b). A second modification is to use 5 grams of (a) and 10 grams of (b)

and a third modification is to use 2 grams of (a) and 2 grams of (b). The procedure is otherwise the same as in Example I.

With respect to Example II, a first modification is to use 5 grams of Celluloid, and a second modification is to use 20 grams of Celluloid, the procedure being otherwise the same.

In place of conventional separators between the electrodes, use may be made of glass wool or a fiber-glass mat soaked with an acid electrolyte containing the organic catalyst in accordance with the invention. It becomes possible with this arrangement to use far less sulfuric acid than in a conventional lead acid cell. Indeed, the amount of acid required is reduced to one fourth of conventional requirements, thereby improving the safety factor of the cell. Because of the greatly reduced amount of acid required and the fact that the acid is held in mats, the dangers and burns which attend spillate of the electrolyte in the event of accident are greatly reduced.

By providing separators in the form of a mixture of silica gel and glass wool soaked in an electrolyte in accordance with the invention, it becomes possible to construct what amounts to a dry cell having a very low internal resistance, for the electrolyte is adsorbed by the gel and becomes paste-like as in a dry cell.

Since the electrolyte in a lead-acid cell in accordance with the invention does not give rise to

sulfation of the electrodes and a depreciation of their active mass, the cell has a much longer effective working life, good low temperature characteristics and other advantages heretofore realised only in alkaline batteries but without the current limitations of alkaline batteries.

While there have been shown and described preferred embodiments of a lead-acid cell in accordance with the invention, it will be appreciated that changes and modifications may be made therein without, however, departing from the scope of the invention as defined in the following claims.

CLAIMS

1. A lead-acid storage cell comprising a lead negative electrode, a lead dioxide positive electrode, and an electrolyte constituted by a sulfuric acid solution characterised in that the electrolyte has a catalyst dissolved therein formed by an organic substance which prevents sulfation of the electrodes and results, during the discharge of the cell, in reduction of the positive electrode and oxidation of the negative electrode.

2. A cell according to claim 1, characterised in that the catalyst is constituted by nitrocellulose and camphor.

3. A cell according to claim 1, characterised in that the catalyst is constituted by cellulose nitrate and camphor.

4. A cell according to any preceding claim, characterised in that the cell further includes glass wool separators between said electrodes saturated with said electrolyte.

5. A cell according to claim 4, characterised in that the glass wool further includes silica gel to adsorb said electrolyte and thereby provide a dry battery.

6. A lead-cell storage battery comprising a plurality of cells according to any preceding claim.

7. A method of preparing a sulfuric acid electrolyte for a lead-acid storage cell, characterised by the steps of dissolving in a highly concentrated solution of sulfuric acid, amounts of nitrocellulose and camphor sufficient to render said cell operative in a reduction-oxidation mode in which sulfation is prevented, and diluting the resultant solution with water to provide a specific gravity appropriate to a lead-acid cell.

8. A method according to claim 6, characterised in that said sulfuric acid is 100 $cm^3$ in an 80% concentration, and said nitrocellulose is 15 grams and said camphor is 2.5 grams.

0054086

European Patent Office

# EUROPEAN SEARCH REPORT

Application number
EP 80 30 4422

## DOCUMENTS CONSIDERED TO BE RELEVANT

| Category | Citation of document with indication, where appropriate, of relevant passages | Relevant to claim | CLASSIFICATION OF THE APPLICATION (Int. Cl.³) |
|---|---|---|---|
| X | GB - A - 570 559 (MARCONI'S WIRELESS TELEGRAPH COMP. LTD.)<br>* Page 1, lines 83-87 *<br>-- | 1 | H 01 M 10/08 |
|  | CHEMICAL ABSTRACTS, vol. 76,no.6, February 7, 1972,<br>page 338, abstract 29965y<br>Columbus, Ohio, USA<br>I.A. AGUF et al. "Mechanism of the effect of organic additives on the operation of a negative lead battery electrode"<br>& SB. RAB. KHIM. ISTOCHNIKAM TOKA. NAUCH. ISSLED. AKKUMULYATORN. INST. 1970, no. 5, 21-30.<br>* Abstract *<br>---- | 1 | TECHNICAL FIELDS SEARCHED (Int. Cl.³)<br>H 01 M |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 10-07-1981 | STANGE |

EPO Form 1503.1 06.78